# EUROPEAN PATENT SPECIFICATION

(11) **EP 0 699 371 B1**
(45) Date of publication and mention of the grant of the patent: **16.08.2000**
(21) Application number: 94915668.1
(22) Date of filing: 23.05.1994
(51) Int. Cl.: H04Q 7/38

(54) **GROUP CALL IN A CELLULAR RADIO SYSTEM**
GRUPPENRUF IN EINEM ZELLULAREN FUNKSYSTEM
APPEL DE GROUPE DANS UN SYSTEME DE RADIOCOMMUNICATIONS CELLULAIRE

(30) Priority: 21.05.1993 GB 9310634; 28.09.1993 EP 93307663
(43) Date of publication of application: 06.03.1996
(73) Proprietor: BRITISH TELECOMMUNICATIONS public limited company, London EC1A 7AJ (GB)
(72) Inventor: YARWOOD, Anthony, Charles, Suffolk IP4 4EQ (GB)
(74) Representative: Lidbetter, Timothy Guy Edwin
(86) International application number: GB9401123
(87) International publication number: WO9428687

(56) References cited:
- EP-A- 0 549 054
- DE-A- 3 130 408
- GB-A- 2 075 799
- COMMUTATION ET TRANSMISSION, vol.11, no.2, 1989, PARIS FR pages 39 - 50 COUDREUSE 'LES SYSTEMES DE RADIOCOMMUNICATION MOBILE A RESSOURCES PARTAGEES TN10 - TN100 - TN200'

## Description

This invention relates to cellular radio systems. A typical cellular radio system includes a number of base stations linked together to form a network, the base stations being under the control of a mobile switching centre which can also have a connection to a fixed network. Each base station has one or more antennas for providing radio coverage within an area around the base station. This area is known as a cell. Each base station is capable of radio communication with a number of mobile units operating in its cell.

In order to set up a call to a mobile unit, the mobile switching centre sends out a paging signal to all the base stations. If the mobile unit which is being paged responds, the base station which receives the response allocates a channel, from a number of channels available to it, for communication with the mobile unit.

In a conventional cellular radio system a mobile unit does not hold on to the same resource (radio channel) throughout its call. As the mobile progresses from one cell to another within the network, handover from a resource in the old cell to another resource within the new cell is performed by switching to a new channel. This allows the mobile unit to roam over specific geographic areas without significant interruption to the communication path, whilst allowing re-use of released resources by other mobile units. Existing cellular radio systems are designed for use by individual mobile units making and receiving calls on a one-to-one basis, so that a mobile unit can be connected to one other mobile unit on the cellular network, or to one terminal on an interconnected fixed network (eg PSTN). When a call is set up, the mobile unit is assigned a channel (defined by e.g frequency and/or timeslot) which, for the duration of the assignment, only that mobile can

For some purposes, in particular in the emergency services (ESs) such as fire, police, ambulance, coastguard, mountain rescue etc., there is a requirement for a control centre (the "dispatcher") to be able to call to all mobile units simultaneously (known as a "broadcast" service) or for one mobile unit to call all the others (an "all-informed" service). However, these services require access to these facilities for only a small proportion of their operational requirements. It is thus wasteful of resources to devote equipment and spectrum in the radio band exclusively to the provision of such services. Other services with field forces such as taxi and public transport operators, utilities such as gas and telecommunications companies, and dispatch companies, also have a need to communicate with several members of the field force at once.

Many of these services' other communication requirements can be met by existing cellular systems. For example, existing systems allow calls to be made between an individual mobile unit and the dispatcher, initiated by either party. However, existing cellular radio systems do not meet the requirements for the "broadcast" or "all-informed" service. It would be especially advantageous to support the requirements of the emergency services on a cellular system, because the emergency services' existing private networks have to have a high capacity to allow the system to cope with extreme situations, but this capacity is rarely required, and the system is generally under utilized.

Some cellular systems offer a supplementary service known as "multi-party calling" or "conference calling". This would allow a number of mobiles to communicate with the dispatcher and each other simultaneously. Call set-up can be initiated by any of the participants. However, multi-party calling presents some operational restrictions for the emergency services. In particular there is the need to set up calls individually; with the inherent time overhead, and the requirement for separate radio resources to be devoted to the system for each member of the multi-party call, which is wasteful of physical resources and can lead to capacity problems.

By the nature of their duties, the emergency services often have to deploy a large number of resources into a small area. This can put a heavy demand on the resources of the local base station of a cellular system if each unit requires its own channel. The base station might not be capable of meeting these capacity requirements, even if the emergency service mobiles are given priority over all other users. The nature of emergencies makes normal cell enhancement methods unsuitable for coping with these unpredictable sudden high demands.

United Kingdom Patent Specification GB 2075799 (Western Electric) describes a system in which a message may be transmitted to several mobile units in the same cell, using an allocated "fleet listen" channel. This system requires such a channel to be allocated to each cell in the desired area of coverage, whether or not any mobile units are actually present in the cell.

German Patent Specification DE 3130408 discusses a system in which a message may be transmitted to several mobile units in one cell. On setting up a call, the system retrieves data from a database to identify, for each mobile unit for which the call is intended, in which cell that mobile unit was last reported, and then transmits the message to each cell in which at least one mobile unit is identified. This allows more efficient use of the resources in the broadcast area, at the expense of some greater complexity. Since emergency services in particular are likely to be allocated the highest degree of priority there should be no problems in making a channel available for the broadcast service, even if this means an existing point-to-point call has to drop out. However, if a large number of mobile units are involved, this requires considerable processing time to retrieve the data from the database. Furthermore, the information from the database may be inaccurate, if mobile units have moved since the most recent update. Moreover, the system cannot easily arrange for cells to be added or removed from the call as mobile units move between cells during the call.

According to the invention, there is provided a cellular radio system comprising: a switching centre and a plurality of radio base stations each having an associated plurality of traffic channels for serving an associated cell, and a plurality of mobile units, wherein for each of a plurality of the radio base stations one of the associated channels can be dedicated to a broadcast service, and a selected group of at least some of the mobile units each have means for establishing the channel associated with the broadcast service, so that a call from the switching centre can be transmitted by a base station over the dedicated channel to the selected group of mobile radio units within the respective cell,
characterised in that each base station comprises means for transmitting a paging signal, each mobile unit of the selected group has means for transmitting a response to the paging signal, and each base station has means for dedicating a channel to the broadcast service at only those base stations which receive one or more responses to the paging signal.

This arrangement not only allows the system to identify cells currently supporting mobile units of the selected group more accurately, but it achieves it without the need to consult a location database for each individual unit.

It is advantageous to provide means for repeating the paging signal periodically throughout a broadcast. It can be arranged that the channel dedicated to the broadcast service may then be released if no mobiles continue to respond to the repeated paging signal in a particular cell. Moreover, it can be arranged that a channel be allocated part of the way through a broadcast if a mobile enters a cell in which there are no others already present.

The plurality of base stations from which the broadcast service can be transmitted may be selected according to the area of coverage required, for example administrative district covered by the user of the broadcast service.

In a preferred embodiment there is the facility for a broadcast to be initiated from one of the mobile units, to provide the "all-informed" service described above. The term "broadcast" as used in this specification hereinafter embraces such a service.

Means may be provided for supporting a plurality of broadcast services to different groups of mobile units, arranged such that for each of a plurality of the base stations one of the associated channels can be allocated to each broadcast service. This allows several broadcast services for different user groups to be supported at once. Different groups of the base stations may support different groups of the broadcast services to allow for different but overlapping geographical coverage requirements.

For some embodiments the use of conventional mobile radio handset units may be possible. For example, the units may have means to allow them to respond to a special broadcast service paging signal, but alternatively, the system may simply identify the unit as being one subscribing to the broadcast service by matching its identification code with, for example, an additional look-up table in that part of the system which identifies whether a mobile unit is authorised to use the cellular network. However, for many of the preferred arrangements, described below, specially adapted radio units may be required.

Where a broadcast may be initiated from one of the mobile units, it is advantageous for the units to include means for inhibiting transmission by the unit on the broadcast channel if other traffic is detected on that channel, to ensure that only one unit is broadcasting at a time. Moreover, if the unit were to continue receiving at the same time as it is transmitting on the broadcast channel echo effects and/or feedback howl could be caused. It is therefore advantageous to include means for inhibiting reception by the unit when it is transmitting on the broadcast channel.

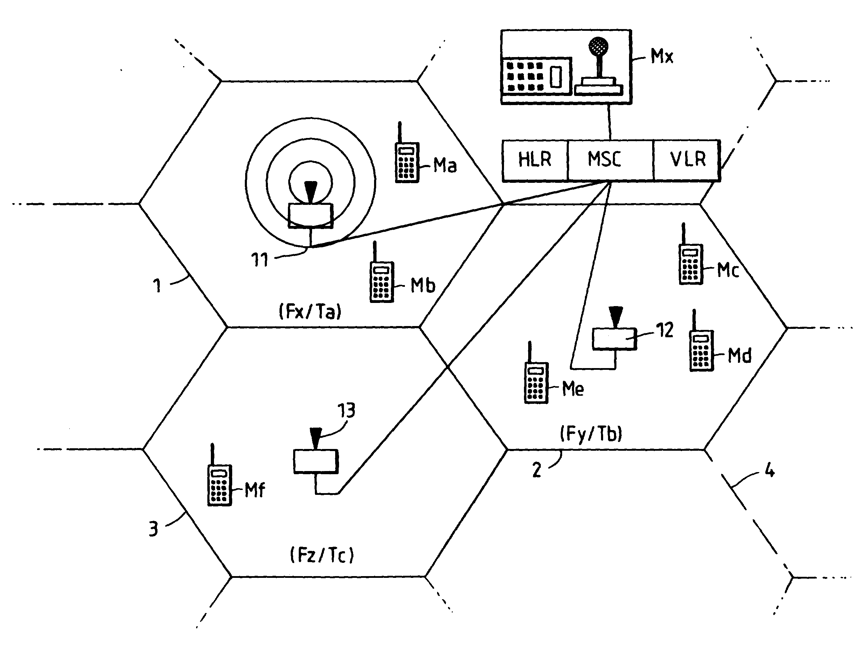

Preferred embodiments of the invention will be described with reference to the drawing, which schematically represents a cellular radio system of the embodiment and its coverage area for broadcast purposes This coverage area consists of three cells, (Cells 1, 2 and 3) which form part of a larger cellular network (indicated by dotted lines in the figure). In each cell, there is a base station system (BSS) for establishing radio contact with the mobile units (Ma, Mb etc) within the cell.

A mobile switching centre (MSC) controlling the cellular network has associated with it a home location register (HLR) and visitor location register (VLR) as is conventional in cellular systems such as the GSM Pan-European digital cellular system.

The operator of the broadcast service, typically a dispatcher for an emergency service, has a control point which has a link to the Mobile Switching Centre. The control point may be co-located with the mobile switching centre, but will usually be elsewhere.

The broadcast channels referred to herein should not be confused with a broadcast control channel, in GSM known as BCCH; which provides control signalling information for the cellular network as a whole. In particular, the broadcast control channel provides the paging function required in order to identify the location of a mobile unit when an incoming call for that unit is made. These control channels are merely signalling channels carrying signalling data. The broadcast channels in this invention are additional to this, and in normal circumstances carry speech.

In the figure the three cells 1, 2 and 3 represent the coverage area in which the mobiles subscribing to the broadcast service are intended to operate. They might, for example, represent the area covered by a single police force. The network as a whole may provide broadcast services for more than one service, for example, police forces in adjacent areas. Moreover, different emergency services may have their own broadcast services within the same area, or overlapping areas, each one being allocated its own channel, or its own paging signalling. Each of the cells 1, 2, and 3 has a base station, identified as 11, 12 and 13 respectively and there are a number of mobile units identified Ma, Mb, Mc, Md, Me and Mf which can roam throughout the cellular network. The dispatcher or control point is identified by Mx.

The broadcast areas can be tailored to fit the individual Emergency or other Service operating areas. This has the advantage of reducing location update information and provides a means of indicating to the mobile that it is out of the broadcast coverage area, and reducing the signalling overhead by not transmitting paging signals in those cells where a mobile unit should not be found. The area may be an administrative district, such as a Police Authority's jurisdiction, or may be selected according to the nature of the user; for example limiting the broadcast to only those cells covering the routes operated by a public transport operator.

Each mobile unit is allocated two identities; namely the unique identity which can be used for individual calls, as a standard cellular mobile unit, and an operational group identity for broadcast calls.

The basic operation of the mobile unit remains the same as in standard cellular practice in that the mobile unit is able to make and receive point-to-point calls. To set up a broadcast call a broadcast group identity is paged by all the base stations 11, 12, 13 in the broadcast area. Each mobile unit operating in the broadcast area which has that broadcast group identity responds to the base station as to a normal page. The first unit in each cell to respond is allocated a channel e.g. (Fx/Ta in Cell 1). Should there be another mobile unit in the same cell (e.g. Mb), it is instructed to tune to the same channel. In this way only one channel is required for each cell. However, if no mobile responds in a particular cell, no channel is allocated in that cell. This approach only requires the use of a channel in those cells in which there are mobile units subscribing to the broadcast system.

If, at the time of paging, one of the emergency service mobiles is engaged on a point-to-point call, that call will be terminated. The channel allocated to that call can then be used for the broadcast service. If no emergency service mobile is currently engaged on a point-to-point call a free channel is allocated, or if none are free, one is seized from a lower-priority call. Ideally, a warning message will warn the callers that this is about to happen, and why.

Once the physical channel has been determined, the base station will set up a connection to the mobile switching centre. Each base station involved in the broadcast area is connected to the dispatch centre Mx via the switching centre MSC, where there will be a multiple connection conference bridge for interconnecting the traffic service to the dispatcher. This conference bridge does not need to be as complex as it would be for a conference between all the mobiles working independently in a conventional manner, since only one connection to the bridge per base station instead of one per mobile is needed.

The mobile units have their transmitters disabled while the service is running, so a base station will not get any information on the uplink from the mobile unit. This means that the mobile will not receive any power control or timing advance information.

When the broadcast facility is no longer required, the dispatcher releases the call which stops the paging and releases the resources at each cell in the broadcast area. The mobile units can then resume normal cellular operation.

As a mobile unit, for example Mb, moves from the coverage of the broadcast channel in cell 1, it will normally drop out of the broadcast group in that cell. This drop out decision is taken by the mobile unit and is based on quality of service measurement. Conventional handover techniques cannot be used in this situation, because in the broadcast service the movement of a mobile between cells does not necessarily require the allocation of a new channel in the new cell or the release of one in the old cell (as it would in a conventional handover) since other mobiles may be present in either or both cells. Instead, the paging procedure is repeated at intervals throughout a broadcast call. Should a mobile respond in a cell to which no channel is currently allocated (i.e. it has entered an empty cell) a channel will be allocated. A mobile unit may miss initial page attempts for the broadcast service, but an appropriate repetition rate will minimise the level of speech loss which could occur whilst the mobile is finding the new channel. This handover process can be speeded up by using the broadcast control channel to broadcast the physical channel data for each active cell in the broadcast group to the mobiles.

If no mobiles respond to a page repetition from a base station then it may be assumed that there are no longer any mobiles in the cell and the channel can be released. However, because of the possibility that a mobile is still in the cell but has missed a paging attempt the channel is only released after a number of successive paging attempts fail to get a response.

When the broadcast facility is no longer required then the broadcast centre releases the call which stops further pages and releases the resources at base stations and mobiles.

If it is desired to use encryption in the broadcast, a facility which is particularly useful for the emergency services, this can be provided comparatively easily. The encryption algorithm may be carried out over the air interface, for example to allow the channel allocated to be changed on a predetermined basis known only to the operating system and encryption software in the mobile units. Alternatively, the emergency services may prefer to run their own encryption algorithm end to end, with no further encryption over the air interface. Alternatively there may be a more flexible approach, more in tune with the way in which conventional cellular systems operate. This approach requires that the broadcast service mobile units Ma to Mf are first authenticated over a dedicated signalling resource before the mobile is permitted to move to the shared physical channel. In much the same way as in standard cellular radio encryption systems the encryption key is generated from a random number during the authentication process. The mobile responds to the visitor location register with a response which is then checked before encryption begins. However, it must be noted that all elements in the system have to use the same random number and generate the same encryption key for each mobile in a serving cell so that they can share the same physical channel. The allocation of the special group identity must also be supported by the same allocation of a secret key, otherwise a different response will be returned to the VLR and a different encryption key generated for each member of the group.

There may be a requirement to provide the broadcast service in specific geographical areas, for example different police force areas. This could be provided through tailoring of the paging to certain base stations only. In general the paging area is pre-defined by the operator and managed by the VLR. This means that for all calls, the same base stations are used for paging. If, however, a link is made between the mobile station identity and the paging area in the VLR it would be possible for an operator to provide paging for specific identities only when they are in specified areas.

The system described above can support an "all-informed" service, in which a message from a mobile Ma can be heard by all others. The call set-up is as described above, except that it is initiated from mobile Ma instead of the control point Mx. Mobile Mb will therefore be allocated the same channel as Ma because it is in the same cell. In order to avoid the delayed speech being heard by the speaker, the mobile Ma making the transmission must have reception inhibited. The mobile units Ma, Mb, Mc, Md, Me, Mf are designed so that transmission is inhibited if any traffic is detected on the channel, so that only one mobile can transmit at once.

The mobile unit must determine a timing advance, in order to transmit on the up-link portion of the broadcast channel. A random access burst is passed to the base station on the uplink of the broadcast channel, and a timing correction is calculated and passed to the mobile by means of the downlink portion of the broadcast channel. Once timing correction has been attained the mobile unit can then transmit. The transmitting mobile's speech can be retransmitted in the downlink broadcast channel provided that a conference facility is available in the operational control room. The mobile which is transmitting must inhibit its own receiver to prevent reception of its own speech after a time delay. Whilst the mobile is transmitting on that channel the other mobile units are inhibited from making broadcasts because traffic is detected on the channel. This can be achieved most easily by providing a "press to talk" button on the mobile unit. The "press to talk" button will allow the mobile unit to transmit (provided that no other mobile or the dispatcher is already transmitting on the channel) and inhibit reception.

One mobile switching centre could support more than one broadcast network, which may cover different broadcast areas (e.g. different police authorities) or may have overlapping broadcast areas (e.g. fire, police and ambulance services within the same area).

The invention therefore allows a broadcast facility to be provided to or between a number of mobile units within a cellular system. General traffic can be carried on the same system in a conventional manner.

Although the broadcast service has been described with reference to use by the emergency services, the facility could also be provided for other users who require similar facilities such as taxi operators, parcel couriers, railway operators etc.

## Claims

1. A cellular radio system comprising: a switching centre (MSC) and a plurality of radio base stations (11, 12, 13) each having an associated plurality of traffic channels for serving an associated cell, and a plurality of mobile units (Ma, Mb, Mc, Md, Me, Mf), wherein for each of a plurality of the radio base stations one of the associated channels (Fx,Ta) can be dedicated to a broadcast service, and a selected group of at least some of the mobile units each have means for identifying the channel associated with the broadcast service, so that a call from the switching centre (MSC) can be transmitted by a base station (11) over the channel to the selected group of mobile radio units (Ma, Mb) within the respective cell,
characterised in that each base station (11, 12, 13) comprises means for transmitting a paging signal, each mobile unit (Ma, Mb, Mc, Md, Me, Mf) of the selected group has means for transmitting a response to the paging signal, and each base station has means for dedicating a channel to the broadcast service at only those base stations which receive one or more responses to the paging signal.

2. A cellular radio system according to claim 1 having means for repeating the paging signal periodically throughout a broadcast.

3. A cellular radio system according to claim 2, arranged such that in each cell, a channel continues to be dedicated to the broadcast service only if one or more mobiles continue to respond to the repeated paging signal in that cell.

4. A cellular radio system according to claims 2 or 3 arranged such that during a broadcast, if a response to a paging signal is received from a mobile unit in a cell in which no channel is currently dedicated to the broadcast service, a channel is then dedicated to the broadcast service in that cell.

5. A cellular radio system according to any one of claims 1 to 4 arranged such that if one or more mobiles respond to a page in a cell in which no channel is free, a channel is seized from an existing call.

6. A cellular radio system according to claim 5 having means for transmitting a warning message to the parties to the existing call before a channel is seized.

7. A cellular radio system according to any preceding claim, in which a broadcast may be initiated from one of the mobile units.

8. A cellular radio system according to claim 7 comprising means for initiating a broadcast from a mobile unit using the channel dedicated to the broadcast service.

9. A cellular radio system according to claim 8 in which, on a broadcast being initiated from one of the mobile units, the base station with which that mobile unit is in communication performs a timing adjustment to the communication path from the mobile unit to the base station.

10. A mobile radio unit for use in a cellular radio system according to claim 6, characterised in having means for inhibiting transmission by the unit on the broadcast channel when it detects other traffic on the channel.

11. A mobile radio unit for use in a cellular radio system according to claim 6 characterised in having means for inhibiting reception by the unit when it is transmitting on the broadcast channel.

## Patentansprüche

1. Zellenfunksystem, das umfaßt: ein Vermittlungszentrum (NSC) und mehrere Funkbasisstationen (11, 12, 13), wovon jeder mehrere Verkehrskanäle für die Bedienung einer zugeordneten Zelle zugeordnet sind, und mehrere Mobileinheiten (Ma, Mb, Mc, Md, Me, Mf), wobei für jede von mehreren der Funkbasisstationen einer der zugeordneten Kanäle (Fx, Ta) einem Rundrufdienst zugewiesen werden kann und wobei eine ausgewählte Gruppe aus wenigstens einigen der Mobileinheiten jeweils eine Einrichtung zum Identifizieren des dem Rundrufdienst zugeordneten Kanals besitzt, so daß ein Anruf vom Vermittlungszentrum (MSC) durch eine Basisstation (11) über den Kanal an die ausgewählte Gruppe von Mobilfunkeinheiten (Ma, Mb) innerhalb der jeweiligen Zelle übertragen werden kann,
dadurch gekennzeichnet, daß jede Basisstation (11, 12, 13) eine Einrichtung zum Übertragen eines Rufsignals aufweist, jede Mobileinheit (Ma, Mb, Mc, Md, Me, Mf) der ausgewählten Gruppe eine Einrichtung zum Übertragen einer Antwort auf das Rufsignal aufweist und jede Basisstation eine Einrichtung aufweist, die dem Rundrufdienst nur an jenen Basisstationen, die eine oder mehrere Antworten auf das Rufsignal empfangen, einen Kanal zuweist.

2. Zellenfunksystem nach Anspruch 1, das eine Einrichtung zum periodischen Wiederholen des Rufsignals während eines gesamten Rundrufs aufweist.

3. Zellenfunksystem nach Anspruch 2, das so beschaffen ist, daß in jeder Zelle ein Kanal nur dann fortgesetzt dem Rundrufdienst zugewiesen wird, wenn eine oder mehrere Mobileinheiten fortgesetzt auf das wiederholte Rufsignal in der Zelle antworten.

4. Zellenfunksystem nach den Ansprüchen 2 oder 3, das so beschaffen ist, daß während eines Rundrufs ein Kanal dann, wenn eine Antwort auf ein Rufsignal von einer Mobileinheit in einer Zelle, in der momentan kein Kanal dem Rundrufdienst zugewiesen ist, empfangen wird, dem Rundrufdienst in dieser Zelle zugewiesen wird.

5. Zellenfunksystem nach einem der Ansprüche 1 bis 4, das so beschaffen ist, daß dann, wenn eine oder mehrere Mobileinheiten auf einen Ruf in einer Zelle antworten, in der kein Kanal frei ist, ein Kanal von einem bestehenden Anruf belegt wird.

6. Zellenfunksystem nach Anspruch 5, das eine Einrichtung zum Übertragen einer Warnnachricht an die Teilnehmer des bestehenden Anrufs vor dem Belegen eines Kanals aufweist.

7. Zellenfunksystem nach einem vorhergehenden Anspruch, in dem ein Rundruf von einer der Mobileinheiten eingeleitet werden kann.

8. Zellenfunksystem nach Anspruch 7, mit einer Einrichtung zum Einleiten eines Rundrufs von einer Mobileinheit unter Verwendung des dem Rundrufdienst zugewiesenen Kanals.

9. Zellenfunksystem nach Anspruch 8, in dem dann, wenn von einer der Mobileinheiten ein Rundruf eingeleitet wird, die Basisstation, mit der diese Mobileinheit kommuniziert, eine Zeiteinstellung für den Kommunikationsweg von der Mobileinheit zur Basisstation ausführt.

10. Mobilfunkeinheit zur Verwendung in einem Zellenfunksystem nach Anspruch 6, gekennzeichnet durch eine Einrichtung, die eine Übertragung durch die Einheit auf dem Rundrufkanal verhindert, wenn sie anderen Verkehr im Kanal erfaßt.

11. Mobilfunkeinheit zur Verwendung in einem Zellenfunksystem nach Anspruch 6, gekennzeichnet durch eine Einrichtung, die einen Empfang durch die Einheit verhindert, wenn diese auf dem Rundrufkanal sendet.

## Revendications

1. Système de radiocommunications cellulaire comprenant : un centre de commutation (MSC) et un certain nombre de stations de radiocommunications de base (11, 12, 13) comportant chacune un certain nombre de canaux de trafic associés destiné à desservir une cellule associée, et un certain nombre d'unités mobiles (Ma, Mb, Mc, Md, Me, Mf), dans lequel pour chacune d'un certain nombre des stations de radiocommunications de base l'un des canaux associés (Fx, Ta) peut être réservé à un service de diffusion, et un groupe sélectionné d'au moins certaines des unités mobiles comportent chacune un moyen destiné à identifier le canal associé au service de diffusion, de sorte qu'un appel provenant du centre de commutation (MSC) peut être transmis par une station de base (11) sur le canal vers le groupe sélectionné des unités radio mobiles (Ma, Mb) à l'intérieur de la cellule respective,
caractérisé en ce que chaque station de base (11, 12, 13) comprend un moyen destiné à émettre un signal de recherche, chaque unité mobile (Ma, Mb, Mc, Md, Me, Mf) du groupe sélectionné comporte un moyen destiné à transmettre une réponse au signal de recherche, et chaque station de base comporte un moyen destiné à réserver un canal au service de diffusion uniquement pour les stations de base qui reçoivent une ou plusieurs réponses au signal de recherche.

2. Système de radiocommunications cellulaire selon la revendication 1, comportant un moyen destiné à répéter le signal de recherche périodiquement pendant toute une diffusion.

3. Système de radiocommunications cellulaire selon la revendication 2, agencé de telle sorte que dans chaque cellule, un canal continue à être réservé au service de diffusion uniquement si un ou plusieurs mobiles continuent à répondre au signal de recherche répété dans cette cellule.

4. Système de radiocommunications cellulaire selon les revendications 2 ou 3, agencé de telle sorte que durant une diffusion, si une réponse à un signal de recherche est reçue depuis une unité mobile dans une cellule dans laquelle aucun canal n'est actuellement réservé au service de diffusion, un canal est alors réservé au service de diffusion dans cette cellule.

5. Système de radiocommunications cellulaire selon l'une quelconque des revendications 1 à 4, agencé de telle manière que si un ou plusieurs mobiles répondent à une recherche dans une cellule dans laquelle aucun canal n'est libre, un canal est réquisitionné à partir d'un appel existant.

6. Système de radiocommunications cellulaire selon la revendication 5, comportant un moyen destiné à émettre un message d'avertissement aux interlocuteurs de l'appel existant avant qu'un canal soit réquisitionné.

7. Système de radiocommunications cellulaire selon l'une quelconque des revendications précédentes, dans lequel une diffusion peut être lancée à partir de l'une des unités mobiles.

8. Système de radiocommunications cellulaire selon la revendication 7, comprenant un moyen destiné à lancer une diffusion à partir d'une unité mobile en utilisant le canal réservé au service de diffusion.

9. Système de radiocommunications cellulaire selon la revendication 8, dans lequel, lorsqu'une diffusion est lancée à partir de l'une des unités mobiles, la station de base avec laquelle cette unité mobile est en communication, exécute un ajustement de la synchronisation sur la voie de communications depuis l'unité mobile vers la station de base.

10. Unité radio mobile destinée à être utilisée dans un système de radiocommunications cellulaire selon la revendication 6, caractérisée en ce qu'elle comporte un moyen destiné à interdire une émission par l'unité sur le canal de diffusion lorsqu'il détecte un autre trafic sur le canal.

11. Unité radio mobile destinée à être utilisée dans un système de radiocommunications cellulaire selon la revendication 6, caractérisée en ce qu'elle comporte un moyen destiné à interdire une réception par l'unité lorsqu'elle émet sur le canal de diffusion.
